# EUROPÄISCHE PATENTSCHRIFT

(11) **EP 3 029 384 B1**
(45) Veröffentlichungstag und Bekanntmachung des Hinweises auf die Patenterteilung: **13.06.2018**
(21) Anmeldenummer: 15186033.5
(22) Anmeldetag: 21.09.2015
(51) Int. Cl.: F24F 1/00, F24F 5/00

(54) **DEZENTRALES KLIMAGERÄT MIT EINEM IM INNENRAUMGERÄT ANGEORDNETEN LATENTWÄRMESPEICHER**
DECENTRALIZED AIR CONDITIONER COMPRISING A LATENT HEAT STORAGE ARRANGED INSIDE THE INDOOR UNIT
INSTALLATION DE CLIMATISATION DÉCENTRALISÉE AVEC UN ACCUMULATEUR DE CHALEUR LATENTE

(30) Priorität: 24.11.2014 DE 102014117149
(43) Veröffentlichungstag der Anmeldung: 08.06.2016
(73) Patentinhaber: innogy Netze Deutschland GmbH, 45128 Essen (DE)
(72) Erfinder:
(74) Vertreter: Richly Ritschel

(56) Entgegenhaltungen:
- EP-A1- 2 700 884
- DE-A1- 3 938 875
- US-A- 2 677 243

## Beschreibung

Die Erfindung betrifft eine dezentrale Anlage für die Klimatisierung von Aufenthaltsräumen mit einem raumseitigen Anlagenteil und einem außenseitigen Anlagenteil, mit wenigstens einem geschlossenen Wärmeträgerkreislauf für ein Wärmeträgermedium, mit wenigstens einem Raumluftwärmetauscher und wenigstens einem Außenwärmetauscher, wobei der Raumluftwärmetauscher und der Außenwärmetauscher an den Wärmeträgerkreislauf angeschlossen sind, mit wenigstens einem Verdichter, mit einer elektrischen Steuereinrichtung zur Regelung des Verdichters sowie mit Mitteln zur Verdampfung des Wärmeträgermediums.

Die Erfindung betrifft weiterhin ein Verfahren zur Klimatisierung von Aufenthaltsräumen unter Verwendung einer dezentralen Anlage, die nach dem Prinzip der Luft-Luft-Wärmepumpe arbeitet.

Dezentrale Klimaanlagen sind in wärmeren Ländern weit verbreitet, wobei dort auch solche Klimaanlagen Anwendung finden, die sowohl eine Beheizung als auch eine Kühlung von Aufenthaltsräumen ermöglichen.

Diese sogenannten Splitgeräte oder Kompaktgeräte umfassen üblicherweise einen auf der Außenfassade eines Gebäudes angeordneten Außenluftwärmetauscher sowie einen in dem zu klimatisierten Raum angeordneten Raumluftwärmetauscher. Bekannte Kompaktklimageräte sind beispielsweise als sogenannte Brüstungsgeräte konfiguriert, wobei ein außenseitiger Anlagenteil und ein raumseitiger Anlagenteil auf einander gegenüberliegenden Innen.-bzw. Außenwandseiten eines Raumes im Brüstungsbereich installiert sind. Der Heizbetrieb eines solchen Gerätes erfolgt durch Wärmegewinn aus der Luft im Wärmepumpenbetrieb oder durch Betrieb eines zusätzlichen elektrischen Heizaggregats. Splitgeräte haben sich insbesondere in wärmeren Regionen durchgesetzt, in welchen selten ein Heizbetrieb benötigt wird.

Sowohl der Heizbetrieb als auch der Kühlbetrieb erfordern den Einsatz von elektrischer Energie aus dem Stromversorgungsnetz. Der Preis von elektrischer Energie aus einem Stromversorgungsnetz sowie die Verfügbarkeit von elektrischer Energie aus regenerativen Quellen sind jedoch stark lastabhängig und unterliegen deshalb starken jahreszeitlichen und tageszeitlichen Schwankungen. Aus diesem Grund haben sich sowohl elektrische Heizgeräte als auch Kombigeräte gegenüber Zentralheizungen, beispielsweise gegenüber Öl- und Gaszentralheizungen nicht durchgesetzt.

Mit steigendem Anteil erneuerbarer Energien an der Stromerzeugung kommt es zunehmend zu Situationen, in denen das regenerative Stromangebot die zeitgleiche Nachfrage übersteigt. Eine wirtschaftlich wie ökologisch sinnvolle Alternative zur Betriebseinschränkung von Anlagen zur Erzeugung regenerativen Stroms ist eine Verwendung des erzeugten Überschussstroms im Wärmemarkt.

Neubauten müssen aufgrund gesetzlicher Bestimmungen immer strengere Obergrenzen beim Wärmebedarf einhalten und zusätzlich den Nachweis erbringen, dass ein nicht unerheblicher Teil der benötigten Heizenergie aus regenerativen Energiequellen gedeckt wird. Bei der Sanierung von Bestandsgebäuden besteht eine Hauptaufgabe darin, nicht nur Ersatz für das bisher verwendete Heizungssystem zu finden, sondern zusätzlich sicherzustellen, dass die Gebäude auch nach Erhöhung der Fugendichtigkeit hinreichend gelüftet werden. Dezentrale Luft-Luft-Wärmepumpen, die als Wärmequelle entweder Außenluft oder Abluft nutzen und ihre Heizaufgabe durch Erwärmung von Umluft bzw. eines Gemischs aus Umluft und Außenluft erfüllen, eignen sich sehr gut für die zuvor beschriebenen Anwendungsbeispiele.

Verglichen mit Wärmepumpen, die als Nutzwärmeträger warmes Wasser verwenden, haben dezentrale Luft-Luft-Wärmepumpen nach konventioneller Bauart den Nachteil einer fehlenden Puffermöglichkeit. Bei Nutzung vergünstigter Stromangebote müsste der Betreiber einer solchen Wärmepumpe allerdings eine Unterbrechung des Heizbetriebs in Kauf nehmen, wenn das Stromnetz starken Lastanforderungen ausgesetzt ist oder wenn das Stromangebot zeitweilig knapp ist.

Es ist bei bestimmten Stromversorgungsangeboten üblich, dass Stromnetzbetreiber mit ihren Kunden sogenannte Sperrzeiten über eine Dauer von 1-2 Stunden vereinbaren. Während dieser Sperrzeit müssen die Kunden auf den direkten Betrieb einer Heizung oder einer Raumluftkühlung verzichten.
Eine Anlage zur Klimatisierung von Aufenthaltsräumen mit einem raumseitigem Anlagenteil und einem außenseitigen Anlagenteil mit den Merkmalen des Oberbegriffs von Anspruch 1 ist aus der US 2,677,243 bekannt. Weiterer Stand der Technik ist aus den Dokumenten EP 2700 884 A1 und DE 39 38 875 A1 bekannt.
Der Erfindung liegt die Aufgabe zugrunde, eine dezentrale Anlage für die Klimatisierung von Aufenthaltsräumen bereitzustellen, die den zuvor geschilderten Nachteilen Rechnung trägt.
Der Erfindung liegt weiterhin die Aufgabe zugrunde, ein Verfahren zur Kühlung oder Heizung von Aufenthaltsräumen unter Verwendung einer solchen Anlage bereitzustellen.

Die Aufgabe wird gelöst durch eine Anlage mit den Merkmalen von Anspruch 1 sowie durch zwei Verfahren zur Klimatisierung von Aufenthaltsräumen mit den Merkmalen der Ansprüche 10 oder 11. Vorteilhafte Ausgestaltungen der Erfindung ergeben sich aus den Unteransprüchen.
Nach einem Gesichtspunkt der Erfindung wird eine dezentrale Anlage für die Klimatisierung von Aufenthaltsräumen bereitgestellt, mit einem raumseitigen Anlagenteil und einem außenseitigen Anlagenteil, mit wenigstens einem geschlossenen Wärmeträgerkreislauf für ein Wärmeträgermedium, mit wenigstens einem Raumluftwärmetauscher und mit wenigstens einem Außenwärmetauscher, wobei der Raumluftwärmetauscher und der Außenwärmetauscher an den Wärmeträgerkreislauf angeschlossen sind, mit wenigstens einem Verdichter mit einer elektrischen Steuereinrichtung zur Regelung des Verdichters sowie mit Mitteln zur Verdampfung des Wärmeträgermediums, wobei, dass der raumseitige Anlagenteil mindestens einen Latentwärmespeicher mit einem Phasenwechselmaterial umfasst und der Latentwärmespeicher an den Wärmeträgerkreislauf angeschlossen ist.

Mittels des Latentwärmespeichers kann thermische Energie für einen Zeitraum von bis zu 2 Stunden und auf möglichst geringem Raum gespeichert werden. Phasenwechselmaterialien (PCM) sind Materialien, die ihren Aggregatzustand wechseln können, zum Beispiel von fest nach flüssig oder gasförmig. Wasser ist hier als wohl bekanntestes PCM zu nennen, dass unter normalen Umgebungsbedingungen (1 bar) bei 0 °C schmilzt bzw. gefriert und bei 100 °C verdampft oder kondensiert. Spezielle Paraffine und Salzhydrate sind aufgrund ihrer davon abweichenden Phasenübergangstemperaturen als Phasenwechselmaterial im Sinne der vorliegenden Erfindung besonders geeignet. Wird ein Phasenwechselmaterial erwärmt und erreichte seine Phasenübergangstemperatur (Schmelzvorgang) bleibt dessen Temperatur nahezu konstant, bis der komplette Schmelzvorgang abgeschlossen ist. Genau wie Eis zunächst komplett geschmolzen sein muss, bevor es als flüssiges Wasser weiter erwärmt werden kann.

Als Phasenwechselmaterial kann beispielsweise für den Heizbetrieb ein Material vorgesehen sein, das bei etwa 40 °C verflüssigt wird.

Als Phasenwechselmaterialien können beispielsweise aliphatisch gesättigte Kohlenwasserstoffe oder entsprechende Alkoholderivate vorgesehen sein. Diese Stoffe können in einen geschlossenen, wärmegedämmten Behälter mit einem Volumen von beispielsweise 50-60 l eingebracht werden. Der Behälter kann in den raumseitigen Anlagenteil integriert sein oder an diesen angeschlossen sein. Durch den Behälter des Latentwärmespeichers können beispielsweise Rohrleitungen des Wärmeträgerkreislaufs hindurch geführt sein, sodass im Wärmetauscher mit dem wärmebeladenen Wärmeträgermedium eine Aufschmelzung des Phasenwechselmaterials bewirkt wird.

Für den Betrieb der dezentralen Anlage zur Raumluftkühlung kann gegebenenfalls ein Latentwärmespeicher mit einem anderen Phasenwechselmaterial vorgesehen sein. Für den Kühlbetrieb lässt sich beispielsweise eine" Kältespeicherung" durch die Verwendung von Phasenwechselmaterialien mit geringeren Schmelztemperaturen, beispielsweise in Form von niederkettigen Paraffinen realisieren. Als Paraffinöle kommen dann beispielsweise Heptadecan, Hexadecan oder andere Alkoholderivate in Betracht.

Bei der bevorzugten Variante der dezentralen Anlage gemäß der Erfindung ist vorgesehen, dass der Außenwärmetauscher als Luft-Wärmetauscher ausgebildet ist.

Alternativ ist es möglich, den Außenwärmetauscher an eine Erdwärmepumpe oder an eine andere Niedertemperaturquelle anzuschließen.
Bei einer bevorzugten Variante der dezentralen Anlage gemäß der Erfindung ist vorgesehen, dass wenigstens der raumseitige Anlagenteil ein Gebläse umfasst.

Der Latentwärmespeicher ist in dem Wärmeträgerkreislauf parallel zu dem Raumluftwärmetauscher geschaltet. Im Heizbetrieb kann dann beispielsweise eine Verflüssigung des Phasenwechselmaterials in dem Behälter des Latentwärmespeichers parallel zu einer Beschickung des Raumluftwärmetauschers mit dem erwärmten Wärmeträgermedium erfolgen.

Als Wärmeträgermedium kann beispielsweise ein Kältemittel vorgesehen sein. Hierunter versteht man im allgemeinen ein Fluid, das zur Wärmeübertragung in einer Kälteanlage eingesetzt wird, und das bei niedriger Temperatur und niedrigem Druck Wärme aufnimmt und bei höherer Temperatur und höherem Druck Wärme abgibt, wobei üblicherweise Zustandsänderungen des Fluids erfolgen, bzw. nach DIN 8960 Abs. 3.1 ein "Arbeitsmedium, das in einem Kältemaschinenprozess bei niedriger Temperatur und niedrigem Druck Wärme aufnimmt und bei höherer Temperatur und höherem Druck Wärme abgibt."

Der Latentwärmespeicher kann beispielsweise einen weiteren Raumluftwärmetauscher umfassen, der bedarfsweise Latentwärme an die Raumluft abgibt oder Wärme aus der Raumluft aufnimmt, je nachdem, ob die dezentrale Anlage gemäß der Erfindung im Heizbetrieb oder im Kühlbetrieb genutzt wird.

Bevorzugt wird als Phasenwechselmaterial ein erstes Phasenwechselmaterial mit einer Verflüssigungstemperatur zwischen 35 und 50 °C, vorzugsweise etwa von 40 °C. Als zweites Phasenwechselmaterial kommt beispielsweise ein Phasenwechselmaterial mit einer Verflüssigungstemperatur zwischen 18 und 23 °C in Betracht.

Der Latentwärmespeicher kann in einem Behälter mehrere Volumina für unterschiedliche Phasenwechselmaterialien umfassen. Alternativ kann die Anlage gemäß der Erfindung mehrerer Latentwärmespeicher als voneinander getrennte Aggregate umfassen.

Wie eingangs bereits erwähnt, kann ein Phasenwechselmaterial hinsichtlich des Schmelzpunkts so beschaffen sein, dass es eine Wärmespeicherung im Heizbetrieb ermöglicht. Ein anderes Phasenwechselmaterial in einem Teilvolumen des gleichen Behälters oder in einem anderen Behälter kann hinsichtlich seines Schmelzpunkts so beschaffen sein, dass dieses während des regulären Kühlbetriebs bis zur Erstarrung abgekühlt wird. Wird der Verdichterbetrieb der Anlage dann unterbrochen, kann sich das Phasenwechselmaterial unter Aufnahme von Wärme aus der Raumluft wieder verflüssigen und sorgt so für eine Raumluftklimatisierung bei Stillstand des Verdichters.

Bei Betrieb des Verdichters, d.h. während der sogenannten Einspeicherphase, kann ein Teilstrom des Wärmeträgermediums bzw. des Kältemittels parallel zum Heizen oder zum Kühlen verwendet werden.

Das Heizen erfolgt zweckmäßigerweise durch Verflüssigung des Wärmeträgermediums bzw. des Kältemittels in dem raumseitigen Anlagenteil der Anlage.

Das Kühlen erfolgt zweckmäßigerweise durch Verdampfen des Wärmeträgermediums bzw. des Kältemittels in dem raumseitigen Anlagenteil der Anlage.

Die Begriffe" dezentrale Anlage" und" Klimaanlage" im Sinne der vorliegenden Anmeldung werden synonym verwendet. Der Einfachheit halber wird im Folgenden auch der Begriff" Klimaanlage" verwendet. Unter einer Klimaanlage im Sinne der der Erfindung ist grundsätzlich eine Anlage zu verstehen, die sowohl heizen als auch kühlen kann.

Vorzugsweise umfasst die Klimaanlage gemäß der Erfindung eine Steuerung des Latentwärmespeichers, die bei Unterbrechung eines vergünstigten Strombezuges während eines Heizbetriebs eine Latentwärmeabgabe an die Raumluft durch Raumluftwärmetausch bewirkt.

Bei Unterbrechung eines vergünstigten Strombezuges während eines Kühlbetriebes erfolgt keine weitere Abkühlung des Phasenwechselmaterials des Latentwärmespeichers, sodass das Phasenwechselmaterial des Latentwärmespeichers durch direkten oder indirekten Raumluftwärmetausch dem Aufenthaltsraum Wärme entzieht.

Die Erfindung betrifft weiterhin ein Verfahren zur Klimatisierung von Aufenthaltsräumen unter Verwendung einer dezentralen Anlage mit den zuvor beschriebenen Merkmalen, die nach dem Prinzip einer Luft-Luft-Wärmepumpe arbeitet, wobei das Verfahren die Speicherung eines Teils der Wärme eines mit Wärme beladenen Wärmeträgermediums zu einer vorgegebenen Betriebszeit eines Verdichters zur Raumluftbeheizung als Latentwärme in einem Latentwärmespeicher vorsieht und wobei bei einer vorgegebenen Nicht-Betriebszeit des Verdichters eine Freisetzung der Latentwärme durch Raumluftwärmetausch vorgesehen ist.

Die Erfindung betrifft weiterhin ein Verfahren zur Klimatisierung von Aufenthaltsräumen unter Verwendung einer dezentralen Anlage, die nach dem Prinzip einer Luft-Luft-Wärmepumpe arbeitet, wobei das Verfahren die Freisetzung von Wärme aus einem Latentwärmespeicher zu einer vorgegebenen Betriebszeit eines Verdichters zur Raumluftkühlung vorsieht und wobei zu einer vorgegebenen Nicht-Betriebszeit des Verdichters eine Speicherung von Latentwärme vorgesehen ist.

Die Erfindung wird nachstehend anhand eines in den Zeichnungen dargestellten Ausführungsbeispiels erläutert.

Es zeigen:
- Figur 1:: eine schematische Darstellung einer dezentralen Anlage gemäß der Erfindung im Heizbetrieb, wobei die Darstellung eine vereinfachte Darstellung des Wärmeträgerkreislaufs unter Verwendung gängiger Schaltsymbole ist,
- Figur 2:: eine schematische Darstellung einer dezentralen Anlage gemäß der Erfindung im Kühlbetrieb, wobei die prinzipielle Darstellung der Darstellung gemäß Figur 1 entspricht.

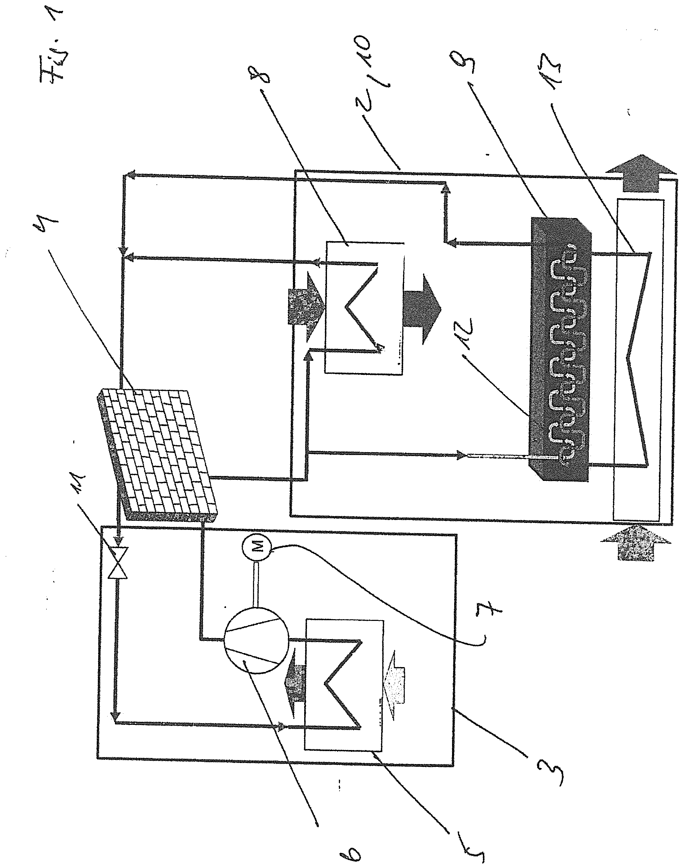

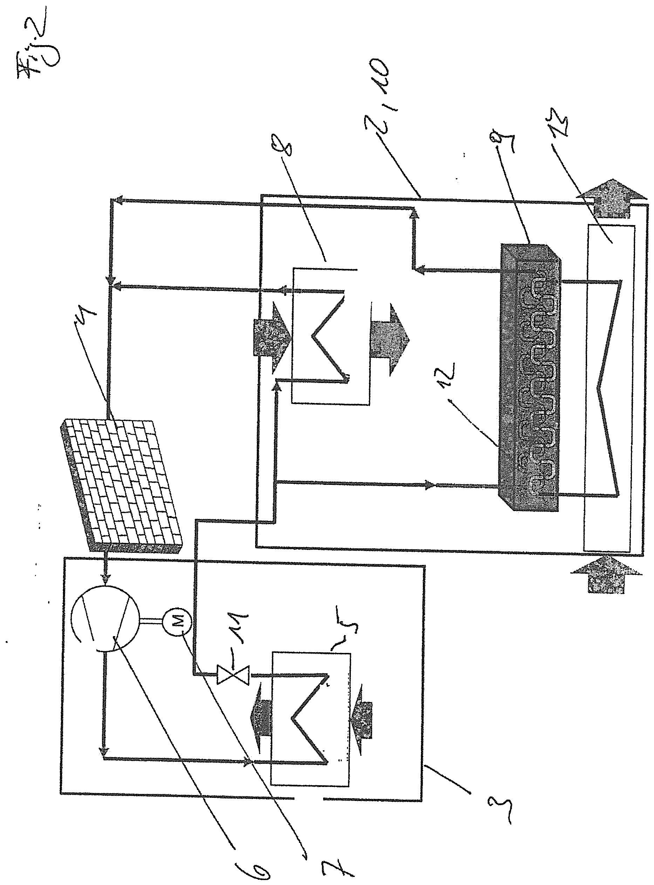

Die Erfindung wird nun zunächst anhand der Abbildung der Figur 1 erläutert. Die Figur 1 zeigt eine dezentrale Anlage 1 gemäß der Erfindung, welche einen raumseitigen Anlagenteil 2 sowie einen außenseitigen Anlagenteil 3 umfasst. Die dezentrale Anlage 1 ist als sogenanntes Split- oder Kombigerät ausgebildet, wobei der raumseitige Anlagenteil 2 und der außenseitige Anlagenteil 3 jeweils unter der Brüstung eines Fensters auf gegenüberliegenden Wandseiten (Innenwandseite und Außenwandseite) einer Hauswand 4 montiert sind. Die Hauswand 4 ist in den Figuren 1 und 2 jeweils nur sinnbildhaft dargestellt.

Der außenseitige Anlagenteil 3 umfasst einen Außenwärmetauscher 5, einen Verdichter 6 sowie einen Elektromotor 7, welcher den Verdichter 6 antreibt. Der raumseitige Anlagenteil 2 umfasst einen Raumluftwärmetauscher 8 und einen Latentwärmespeicher 9, die in einem Aggregat zusammengefasst sind, wobei das Aggregat im Folgenden als Innengerät 10 bezeichnet wird. Grundsätzlich können der Latentwärmespeicher 9 und der Raumluftwärmetauscher 8 in verschiedenen Geräten und entfernt voneinander angeordnet sein.

Sowohl der raumseitige Anlagenteil 2 als auch der außenseitige Anlagenteil 3 können ein nicht dargestelltes Gebläse umfassen, das ebenfalls elektromotorisch angetrieben ist.

Der außenseitige Anlagenteil 3 umfasst ein Entspannungsventil 11, welches dem Außenwärmetauscher 5 vorgeschaltet ist. Der Verdichter 6 ist dem Außenwärmetauscher 5 nachgeschaltet.

Bei dem in Figur 1 schematisch dargestellten Heizbetrieb der dezentralen Anlage 1 wird zunächst ein verdichtetes Kältemittel über das Entspannungsventil 11 entspannt und innerhalb des Außenwärmetauschers 5 verdampft. Dabei nimmt das Kältemittel Wärmeenergie aus der Umgebungsluft auf. Die Durchströmung des Außenwärmetauschers 5 kann beispielsweise mittels eines Gebläses bewirkt werden, welches auf der gleichen Antriebswelle wie der Verdichter 6 angeordnet sein kann. Das mit Wärme beladene Kältemittel wird hinter dem Außenwärmetauscher 5 mittels des Verdichters 6 verdichtet, sodass eine Verflüssigung vor oder in dem Raumluftwärmetauscher 8 unter Abgabe der Wärmeenergie stattfindet.

Der Außenwärmetauscher 5, der Verdichter 6, der Raumluftwärmetauscher 8 und der Latentwärmespeicher 9 sind über einen gemeinsamen, geschlossenen Wärmeträgerkreislauf miteinander verbunden.

Der Latentwärmespeicher 9 ist in dem Wärmeträgerkreislauf parallel zu dem Raumluftwärmetauscher 8 geschaltet. Bei Betrieb des Verdichters 6 wird das wärmebeladene Kältemittel sowohl dem Raumluftwärmetauscher 8 als auch dem Latentwärmespeicher 9 zugeführt. Der Latentwärmespeicher 9 umfasst einen Behälter, der mit einem Phasenwechselmaterial, beispielsweise mit einem Paraffin, gefüllt ist. Der Behälter kann beispielsweise ein Volumen von etwa 30-60 l umfassen und mit einem Schmelzwärmetauscher 12 durchsetzt sein. Das Innengerät 10 umfasst weiterhin einen zweiten Raumluftwärmetauscher 13, der Teil eines weiteren Wärmeträgerkreislauf ist. Über diesen Wärmeträgerkreislauf steht der zweite Raumluftwärmetauscher 13 mit dem Latentwärmespeicher 9 in Verbindung. Der Latentwärmespeicher 9 kann auch unmittebar von Raumluft durchströmbar ausgebildet sein.

Die dezentrale Anlage 1 gemäß der Erfindung umfasst weiterhin eine Steuereinrichtung, die in den Figuren nicht dargestellt ist. Die Steuereinrichtung bewirkt die lastabhängige Steuerung des Verdichters 6 sowie eine Steuerung des Latentwärmespeichers 9 derart, dass zu einer Nicht-Betriebszeit des Verdichters 6 ein Phasenwechsel des Phasenwechselmaterials innerhalb des Behälters des Latentwärmespeichers 9 bewirkt wird, indem ein Wärmetausch zwichen dem Latentwärmespeicher 9 und der Raumluft in Gang gesetzt wird. Dies kann durch Betrieb des Raumluftwärmetauschers 13 oder unmittelbare Durchströmung des Latentwärmetauschers 9 geschehen. Beispielsweise kann auch eine katalytische Einleitung eines Phasenwechsels von flüssig nach fest bewirkt werden. Dabei wird die Latentwärme des Phasenwechselmaterials freigesetzt.

Die Steuereinrichtung kann beispielsweise über das Stromnetz einen Schaltbefehl erhalten, der den Verdichter 6 stillsetzt und der ein Entladen des Latentwärmespeicher 9 bewirkt. So kann beispielsweise ein planmäßiger Stillstand des Verdichters 6 über den Verteilnetzbetreiber eingeleitet werden. Damit der Stromkunde beim Betrieb der dezentralen Anlage 1 dann keine Komforteinbußen hinnehmen muss, wird während des Nichtbetriebs des Verdichters 6 die Latentwärme aus dem Latentwärmespeicher 9 über den zweiten Raumluftwärmetauscher 13 an den zu klimatisierenden Aufenthaltsraum abgegeben.

Grundsätzlich ist es möglich, den Latentwärmespeicher 9 über den integrierten Wärmeträgerkreislauf bzw. Kältemittelkreislauf der dezentralen Anlage 1 zu entladen, alternativ ist es selbstverständlich auch möglich, wie vorstehend beschrieben, den Latentwärmespeicher 9 durch den zuvor erwähnten zusätzlichen Wärmeträgerkreislauf zu entladen.

Die Steuereinrichtung kann alternativ beispielsweise über eine gekoppelte Fotovoltaik-Anlage Steuerbefehle erhalten, sodass beispielsweise der Verdichter 6 nur bei verfügbarer Energie aus der Fotovoltaik-Anlage betrieben wird.

Die dezentrale Anlage 1 gemäß der Erfindung kann raumseitig ausschließlich als Umluftanlage betrieben werden. Selbstverständlich kann die Anlage 1 auch mit einem Umluft-/Außenluft-Gemisch betrieben werden.

Eine weitere Ausführungsform der erfindungsgemäßen Anlage 1 ist in Figur 2 schematisch dargestellt.

Die in Figur 2 wiedergegebene Ansicht beschreibt den Kühlfall.
In diesem Ausführungsbeispiel sind gleiche Bauteile mit gleichen Bezugszeichen versehen. Der Fachmann wird erkennen, dass eine hierzu erforderliche andere Anordnung einzelner Komponenten der Anlage 1 durch eine andere hydraulische Verschaltung der Teile des Wärmeträgerkreislaufs bewerkstelligt werden kann. Dies ist durch eine Verwendung von steuerbaren Mehr-Wege-Ventilen ohne Uminstallation möglich.

In dem außenseitigen Anlagenteil 3 ist das Entspannungsventil 11 dem Außenwärmetauscher 5 nachgeschaltet. Eine Verflüssigung des Kältemittels erfolgt vor oder in dem Außenwärmetauscher 5, wobei das Kältemittel dabei seine Wärmefracht auf die Umgebungsluft überträgt. Hinter dem Außenwärmetauscher 5 wird das Kältemittel dann entspannt und vor oder in dem Raumluftwärmetauscher 8 verdampft, wobei dieses dann die Wärmefracht das zu klimatisierenden Aufenthaltsraumes aufnimmt. Die Begriffe "vor" und "hinter" bezeichnen die Reihenfolge der betreffenden Komponenten in Strömungsrichtung des Wärmeträgermediums beziehungsweise Kältemittels.

Das abgekühlte Kältemittel wird parallel dem Latentwärmespeicher 9 zugeführt, wobei es eine Abkühlung und Verfestigung des in diesem enthaltenen Phasenwechselmaterials bewirkt. Der Wärmetausch des kühlen Kältemittels mit dem Phasenwechselmaterial erfolgt beispielsweise direkt über einen Wärmetauscher 12, der in diesem Fall eine Abkühlung und Verfestigung (Vereisung/Erstarrung) des Phasenwechselmaterials bewirkt.
Bei Nichtverfügbarkeit des Verdichters 6 erfolgt keine weitere Abkühlung (Vereisung) des Phasenwechselmaterials innerhalb des Latentwärmespeichers 9.
Wie dies eingangs bereits erwähnt wurde, umfasst der Latentwärmespeicher 9 für den Kühlfall ein Phasenwechselmaterial mit einer geringeren Schmelztemperatur, beispielsweise niederkettige Paraffine, die beispielsweise bei einer Temperatur zwischen 18 und 23 °C einen Phasenwechsel vollziehen.
Durch die im Vergleich zu Eisspeichern geringeren Temperaturunterschiede zwischen Phasenwechsel im Latentwärmespeicher 9 und der gewünschten Zulufttemperatur (aus Komfortgründen nicht geringer als 18 °C), ist eine Temperaturregelung des Luftstroms nicht erforderlich und außerdem wegen der höheren Verdampfungstemperatur eine optimale Leistungszahl der Anlage gewährleistet.

Durch die Erfindung ist es möglich, eine abschaltbare, dezentrale Anlage 1 ohne Komforteinbußen und bei optimaler Energieeffizienz bereitzustellen.

### Bezugszeichenliste

- 1: dezentrale Anlage
- 2: raumseitiger Anlagenteil
- 3: außenseitiger Anlagenteil
- 4: Hauswand
- 5: Außenwärmetauscher
- 6: Verdichter
- 7: Elektromotor
- 8: Raumluftwärmetauscher
- 9: Latentwärmespeicher
- 10: Innengerät
- 11: Entspannungsventil
- 12: Schmelzwärmetauscher/Wärmetauscher
- 13: zweiter Raumluftwärmetauscher

## Patentansprüche

1. Dezentrale Anlage (1) für die Klimatisierung von Aufenthaltsräumen mit einem raumseitigen Anlagenteil (2) und einem außenseitigen Anlagenteil (3) mit wenigstens einem geschlossenen Wärmeträgerkreislauf für ein Wärmeträgermedium, mit wenigstens einem Raumluftwärmetauscher (8) und wenigstens einem Außenwärmetauscher (5), wobei der Raumluftwärmetauscher (8) und der Außenwärmetauscher (5) an den Wärmeträgerkreislauf angeschlossen sind, mit wenigstens einem Verdichter (6), mit Mitteln zur Verdampfung des Wärmeträgermediums, wobei der raumseitige Anlagenteil (2) wenigstens einen Latentwärmespeicher (9) mit einem Phasenwechselmaterial umfasst und der Latentwärmespeicher (9) an den Wärmeträgerkreislauf angeschlossen ist, **dadurch gekennzeichnet, dass** eine elektrische Steuereinrichtung zur Regelung des Verdichters (6) vorgesehen ist, dass der Latentwärmespeicher (9) in dem Wärmeträgerkreislauf parallel zu dem Raumluftwärmetauscher (8) geschaltet ist, so dass im Heizbetrieb eine Verflüssigung des Phasenwechselmaterials in einem Behälter des Latentwärmespeichers parallel zu einer Beschickung des Raumluftwärmetauschers mit dem erwärmten Wärmeträgermedium erfolgen kann.

2. Dezentrale Anlage nach Anspruch 1, **dadurch gekennzeichnet, dass** der Außenwärmetauscher (5) als Luft-Wärmetauscher ausgebildet ist.

3. Dezentrale Anlage nach einem der Ansprüche 1 oder 2, **dadurch gekennzeichnet, dass** wenigstens der raumseitige Anlagenteil (2) ein Gebläse umfasst.

4. Dezentrale Anlage nach einem der Ansprüche 1-3, **dadurch gekennzeichnet, dass** als Wärmeträgermedium ein Kältemittel vorgesehen ist.

5. Dezentrale Anlage nach einem der Ansprüche 1-4, **dadurch gekennzeichnet, dass** der Latentwärmespeicher (9) einen weiteren Raumluftwärmetauscher (13) umfasst, der bedarfsweise Latentwärme an die Raumluft abgibt oder Wärme aus der Raumluft aufnimmt.

6. Dezentrale Anlage nach einem der Ansprüche 1-4, **dadurch gekennzeichnet, dass** der Latentwärmespeicher (9) unmittelbar raumluftdurchströmbar ausgebildet ist.

7. Dezentrale Anlage nach einem der Ansprüche 1-6, **dadurch gekennzeichnet, dass** das Phasenwechselmaterial ein erstes Phasenwechselmaterial mit einer Verflüssigungstemperatur zwischen 35 °C und 50 °C, vorzugsweise mit einer Verflüssigungstemperatur von etwa 40 °C umfasst.

8. Dezentrale Anlage nach einem der Ansprüche 1-7, **dadurch gekennzeichnet, dass** der Latentwärmespeicher (9) ein zweites Phasenwechselmaterial mit einer Verflüssigungstemperatur zwischen 18 und 23 °C umfasst.

9. Dezentrale Anlage nach einem der Ansprüche 1-8, **gekennzeichnet durch** eine Steuerung des Latentwärmespeichers (9), die bei Unterbrechung eines Heizbetriebs eine Wärmeabgabe an die Raumluft durch Raumluftwärmetausch bewirkt.

10. Verfahren zur Klimatisierung von Aufenthaltsräumen unter Verwendung einer dezentralen Anlage (1) mit den Merkmalen eines der Ansprüche 1- 9, die nach dem Prinzip einer Luft-Luft-Wärmepumpe arbeitet, wobei das Verfahren die Speicherung eines Teils der Wärme eines mit Wärme beladenen Wärmeträgermediums zu einer vorgegebenen Betriebszeit eines Verdichters (6) zur Raumluftbeheizung als Latentwärme in einem Latentwärmespeicher (9) vorsieht und wobei bei einer vorgegebenen Nicht-Betriebszeit des Verdichters (6) eine Freisetzung der Latentwärme durch Raumluftwärmetausch vorgesehen ist.

11. Verfahren zur Klimatisierung von Aufenthaltsräumen unter Verwendung einer dezentralen Anlage (1) mit den Merkmalen eines der Ansprüche 1-9, die nach dem Prinzip einer Luft-Luft-Wärmepumpe arbeitet, wobei das Verfahren die Freisetzung von Wärme aus einem Latentwärmespeicher (9) zu einer vorgegebenen Betriebszeit eines Verdichters (6) zur Raumluftkühlung vorsieht und wobei zu einer vorgegebenen Nicht-Betriebszeit des Verdichters (6) eine Speicherung von Latentwärme vorgesehen ist.

## Claims

1. Decentralized system (1) for the air-conditioning of living rooms, having a room-side system part (2) and an outside system part (3), having at least one closed heat carrier circuit for a heat carrier medium, having at least one room-air heat exchanger (8) and at least one outside heat exchanger (5), wherein the room-air heat exchanger (8) and the outside heat exchanger (5) are connected to the heat carrier circuit, having at least one compressor (6), and having means for evaporating the heat carrier medium, wherein the room-side system part (2) comprises at least one latent heat store (9) which has a phase change material and the latent heat store (9) is connected to the heat carrier circuit, **characterized in that** an electrical control device for regulating the compressor (6) is provided, and **in that**, in the heat carrier circuit, the latent heat store (9) is connected in parallel with the room-air heat exchanger (8), with the result that, in the heating mode, liquefaction of the phase change material in a container of the latent heat store can take place in parallel with charging of the room-air heat exchanger with the heated heat carrier medium.

2. Decentralized system according to Claim 1, **characterized in that** the outside heat exchanger (5) is designed as an air heat exchanger.

3. Decentralized system according to either of Claims 1 and 2, **characterized in that** at least the room-side system part (2) comprises a blower.

4. Decentralized system according to one of Claims 1-3, **characterized in that** a refrigerant is provided as a heat carrier medium.

5. Decentralized system according to one of Claims 1-4, **characterized in that** the latent heat store (9) comprises a further room-air heat exchanger (13) which releases latent heat to the room air or absorbs heat from the room air according to requirement.

6. Decentralized system according to one of Claims 1-4, **characterized in that** the latent heat store (9) is designed such that room air is able to flow through it directly.

7. Decentralized system according to one of Claims 1-6, **characterized in that** the phase change material comprises a first phase change material having a liquefaction temperature of between 35°C and 50°C, preferably having a liquefaction temperature of approximately 40°C.

8. Decentralized system according to one of Claims 1-7, **characterized in that** the latent heat store (9) comprises a second phase change material having a liquefaction temperature of between 18 and 23°C.

9. Decentralized system according to one of Claims 1-8, **characterized by** a controller of the latent heat store (9), which controller effects a release of heat to the room air by room-air heat exchange when a heating mode is interrupted.

10. Method for air-conditioning living rooms through the use of a decentralized system (1) having the features of one of Claims 1-9, which system works according to the principle of an air-air heat pump, wherein the method provides, at a predefined operating time of a compressor (6), the storage of part of the heat of a heat carrier medium, charged with heat, as latent heat in a latent heat store (9) for the purpose of room-air heating, and wherein, at a predefined non-operating time of the compressor (6), a release of the latent heat by room-air heat exchange is provided.

11. Method for air-conditioning living rooms through the use of a decentralized system (1) having the features of one of Claims 1-9, which system works according to the principle of an air-air heat pump, wherein the method provides, at a predefined operating time of a compressor (6), the release of heat from a latent heat store (9) for the purpose of room-air cooling, and wherein, at a predefined non-operating time of the compressor (6), a storage of latent heat is provided.

## Revendications

1. Installation décentralisée (1) pour la climatisation d'espaces de séjour, avec une partie d'application du côté de l'espace (2) et une partie d'application du côté extérieur (3) avec au moins un circuit caloporteur fermé pour un fluide caloporteur, avec au moins un échangeur de chaleur à air ambiant (8) et au moins un échangeur de chaleur à air extérieur (5), l'échangeur de chaleur à air ambiant (8) et l'échangeur de chaleur à air extérieur (5) étant raccordés au circuit caloporteur, avec au moins un compresseur (6), avec des moyens pour évaporer le fluide caloporteur, la partie d'application du côté de l'espace (2) présentant au moins un accumulateur de chaleur latente (9) avec un matériau de changement de phase et l'accumulateur de chaleur latente (9) étant raccordé au circuit caloporteur, **caractérisée en ce qu'**il est prévu un dispositif de commande électrique pour réguler le compresseur (6), **en ce que** l'accumulateur de chaleur latente (9) est branché dans le circuit caloporteur en parallèle avec l'échangeur de chaleur à air ambiant (8) de telle sorte que pendant le fonctionnement de chauffage, une liquéfaction du matériau de changement de phase puisse avoir lieu dans un récipient de l'accumulateur de chaleur latente parallèlement à un chargement de l'échangeur de chaleur à air ambiant avec le fluide caloporteur chauffé.

2. Installation décentralisée selon la revendication 1, **caractérisée en ce que** l'échangeur de chaleur extérieur (5) est réalisé sous forme d'échangeur de chaleur à air.

3. Installation décentralisée selon l'une quelconque des revendications 1 ou 2, **caractérisée en ce qu'**au moins la partie d'application du côté de l'espace (2) présente une soufflante.

4. Installation décentralisée selon l'une quelconque des revendications 1 à 3, **caractérisée en ce que** l'on prévoit en tant que fluide caloporteur un fluide frigorigène.

5. Installation décentralisée selon l'une quelconque des revendications 1 à 4, **caractérisée en ce que** l'accumulateur de chaleur latente (9) comprend un échangeur de chaleur à air ambiant supplémentaire (13) qui fournit au besoin de la chaleur latente à l'air ambiant ou qui extrait de la chaleur de l'air ambiant.

6. Installation décentralisée selon l'une quelconque des revendications 1 à 4, **caractérisée en ce que** l'accumulateur de chaleur latente (9) est réalisé de manière à pouvoir être directement parcouru par l'air ambiant.

7. Installation décentralisée selon l'une quelconque des revendications 1 à 6, **caractérisée en ce que** le matériau de changement de phase comprend un premier matériau de changement de phase avec une température de liquéfaction comprise entre 35°C et 50°C, de préférence avec une température de liquéfaction d'environ 40°C.

8. Installation décentralisée selon l'une quelconque des revendications 1 à 7, **caractérisée en ce que** l'accumulateur de chaleur latente (9) comprend un deuxième matériau de changement de phase avec une température de liquéfaction comprise entre 18 et 23°C.

9. Installation décentralisée selon l'une quelconque des revendications 1 à 8, **caractérisée par** une commande de l'accumulateur de chaleur latente (9) qui, lors de l'interruption d'un fonctionnement de chauffage, provoque une diffusion de chaleur dans l'air ambiant par échange de chaleur avec l'air ambiant.

10. Procédé de climatisation d'espaces de séjour utilisant une installation décentralisée (1) ayant les caractéristiques de l'une quelconque des revendications 1 à 9, qui fonctionne selon le principe d'une pompe à chaleur air-air, le procédé prévoyant le stockage d'une partie de la chaleur d'un fluide caloporteur chargé avec de la chaleur à un moment de fonctionnement prédéfini d'un compresseur (6) pour chauffer l'air ambiant en tant que chaleur latente dans un accumulateur de chaleur latente (9), et une libération de la chaleur latente par échange thermique avec l'air ambiant étant prévue à un moment de non-fonctionnement prédéfini du compresseur (6).

11. Procédé de climatisation d'espaces de séjour utilisant une installation décentralisée (1) ayant les caractéristiques de l'une quelconque des revendications 1 à 9, qui fonctionne selon le principe d'une pompe à chaleur air-air, le procédé prévoyant la libération de chaleur à partir d'un accumulateur de chaleur latente (9) à un moment de fonctionnement prédéfini d'un compresseur (6) pour refroidir l'air ambiant, et une accumulation de chaleur latente étant prévue à un moment de non-fonctionnement prédéfini du compresseur (6).
